# EUROPÄISCHE PATENTSCHRIFT

(11) **EP 3 515 610 B1**
(45) Veröffentlichungstag und Bekanntmachung des Hinweises auf die Patenterteilung: **13.11.2024**
(21) Anmeldenummer: 17768418.0
(22) Anmeldetag: 12.09.2017
(51) Int. Cl.: B08B 7/02, B26D 1/36, B26D 1/547, B26D 1/553, B24B 27/04

(54) **WERKZEUG, VORZUGSWEISE ZUR ENTGRATUNG UND/ODER REINIGUNG VON KUNSTSTOFFBAUTEILEN**
TOOL, PREFERABLY FOR FLASH-TRIMMING AND/OR CLEANING PLASTIC COMPONENTS
OUTIL, DE PRÉFÉRENCE POUR L'ÉBAVURAGE ET/OU LE NETTOYAGE DE PIÈCES EN MATIÈRE PLASTIQUE

(30) Priorität: 19.09.2016 DE 102016117603
(43) Veröffentlichungstag der Anmeldung: 31.07.2019
(73) Patentinhaber: KraussMaffei Technologies GmbH, 85599 Parsdorf (DE)
(72) Erfinder: EICKENS, Sebastian, 47625 Kevelaer (DE)
(74) Vertreter: Käufl, Florian Johannes
(86) Internationale Anmeldenummer: PCT/EP2017/072797
(87) Internationale Veröffentlichungsnummer: WO 2018/050605

(56) Entgegenhaltungen:
- DE-A1- 3 410 634
- DE-A1- 4 000 403
- DE-A1- 4 310 831
- DE-U1- 20 320 821
- JP-A- S61 283 329
- US-A- 5 158 405
- US-A1- 2006 021 408
- US-B1- 6 231 430

## Beschreibung

Die Erfindung betrifft ein Werkzeug zum Entgraten und / oder Reinigen eines Bauteils, d.h. ein Entgrat- und / oder Reinigungswerkzeug / eine Vorrichtung zur Entgratung und / oder Reinigung von Bauteilen, vorzugsweise von Kunststoffbauteilen, alternativ jedoch auch von metallischen Bauteilen, Holz-, Keramik- oder Betonbauteilen, mit einem Schaft und einem an dem Schaft wiederabnehmbar angebrachten Bearbeitungselement. Das Werkzeug kann somit zum Entgraten von Bauteilen und/oder zum Abreinigen von an Bauteilkanten und -flächen anhaftenden Materialien genutzt werden. Aus dem Stand der Technik sind bereits prinzipiell verschiedene Entgratungsmethoden bekannt. In diesem Zusammenhang offenbart bspw. die DE 10 2007 054 523 A1 ein Entgratwerkzeug mit einem als Schaft ausgebildeten Mitnehmer. Auch eine manuelle Entgratung von Bauteilen mit Schleifkörpern oder Klingen oder ähnlichen Bearbeitungselementen ist prinzipiell bekannt.

Die DE 203 20 821 U1 offenbart eine Vorrichtung zum Bearbeiten von Werkstücken zum Entfernen von Oxidschichten, wobei wenigstens eine Bürste vorgesehen, die an einer umlaufenden Fördereinrichtung angeordnet ist.

Aus der US 6 231 430 B1 ist ein Werkzeug zur Reinigung von Kohlenstoffelektroden bekannt. Das Werkzeug weist mehrere Ketten auf, die jeweils an ihren vorderen Endabschnitten und hinteren Endaschnitten an einem Schaft befestigt sind.

Die gattungsgemässe JP S61 283329 A zeigt eine Vorrichtung mit einem Schaft und daran an zwei Aufnahmepositionen angeordnete Ketten, wobei die Aufnahmepositionen relativ beweglich zueinander ausgestaltet sind.

Die DE 34 10 634 A1 beschreibt ein Entzunderungs- Kopfgerät, das Halteelemente aufweist, welche über Verbindungselemente, die gelenkig oder biegsam in Form von Kettenabschnitten oder Drähten ausgestaltet sind, angebracht sind.

Aus der US 2006/021408 A1 ist eine Reinigungsvorrichtung zum Entfernen von metallischen Ablagerungen von den Formoberflächen von Metallformwerkzeugen bekannt, wobei eine drehbare Bürste zum Entfernen von Ablagerungen vorgesehen ist. Aus der DE 40 00 403 A1 ist ein Werkzeug zur Bearbeitung von Bohrungen bekannt, wobei ein Schaft vorgesehen ist, der zwei Aufnahmepositionen zur Aufnahme von mehreren federnden Drähten aufweist.

Die DE 43 10 831 A1 offenbart ein Werkzeug zum Entgraten, insbesondere von Hinterschneidungen und Bohrungsstoßstellen. Dabei sind mehrere Drähte verdrillt an einem Schaft und am gegenüberliegenden Ende an einer Hülse angebracht, wobei Schaft und Hülse zueinander beweglich sind.

Aus der US 5 158 405 A ist eine Entgratungswerkzeug bekannt, das aus einem Draht und einem Schaft besteht, wobei die Enden des Drahts an einer Stelle am Schaft fixiert sind.

Die bisherigen Entgratungsmethoden haben den Nachteil, dass häufig keine stabile Prozessführung möglich ist. Zudem kann ein relativ hoher Personaleinsatz notwendig sein, der auch eine lange Taktzeit mit sich bringt. Weiterhin schwankt die Qualität der Entgratung relativ stark, sodass es zu einer hohen Ausschussrate kommen kann. Außerdem kommt es bei den bisher bekannten manuellen sowie maschinellen Entgratungsmethoden häufig zu einer relativ hohen Belastung des Bauteilgrundkörpers und folglich zu einem relativ starken Abtrag von Material am Bauteilgrundkörper (Gutteil).

Es ist daher die Aufgabe der vorliegenden Erfindung, diese aus dem Stand der Technik bekannten Nachteile zu beheben und insbesondere ein Werkzeug zur Verfügung zu stellen, das eine schonende sowie reproduzierbare Entgratung / Reinigung ermöglichen soll.

Dies wird erfindungsgemäß mit den Merkmalen des Anspruchs 1 gelöst.

Dadurch wird das Bearbeitungselement als Strang / Schlagstrang ausgeführt, der auf eine Schwachstellenabtrennung eines Grates oder einer Materialanhaftung an der Anbindestelle zum Bauteilgrundkörper über verschiedene Parameter der Prozessführung besonders präzise eingestellt ist. Ein Ausgleich der Toleranzen des Werkzeugantriebs, bspw. durch einen Bewegungsautomaten, sowie der Toleranzen der Bauteile wird durch die Nachgiebigkeit dieses Stranges gewährleistet. Das Werkzeug kann sowohl stationär als auch am Bewegungsautomaten präzise eingesetzt und betrieben werden. Somit ist auch eine automatisierte Anwendung mit einem Bewegungsautomaten besonders effektiv.

In anderen Worten ausgedrückt, dient das erfindungsgemäße Entgrat- / Reinigungswerkzeug vorzugsweise zum Entgraten und / oder Reinigen von Kunststoffbauteilen in allen bekannten Ausprägungen (bspw. als Schaum-, Spritzguss-, Guss-, Extrusionsbauteil, usw.). Mit Hilfe bspw. eines Spindelantriebs wird das Entgrat- / Reinigungswerkzeug im Betrieb in Rotation versetzt und der Grat / Flitt / Flint oder die Anhaftung von Material mit geometrisch unbestimmtem oder bestimmten Schneid- / Schlagkörper in Form des Stranges abgetragen. Der Grat wird durch einen wiederholten Schlagimpuls (abhängig von Rotationsdrehzahl des Werkzeuges und Variante des Werkzeuges sowie abhängig von der Vorschubgeschwindigeit des Bewegungsautomaten entlang der Bearbeitungskante oder -fläche) an seiner Scherebene zum Hauptkörper abgetrennt. Da der Schlagenergiebedarf zum Abtrennen des Grates relativ zum Schlagenergiebedarf zum Beschädigen der Oberfläche des Hauptkörpers sehr gering ist, ist der Prozess durch den Strang so einstellbar, dass eine Beschädigung des Hauptkörpers vermieden wird. Unterschiedliche Anwendungsfälle erfordern unterschiedliche Schlagenergien, wobei dies leicht durch Abwandlung des Stranges in Masse, Material, Eigensteifigkeit und geometrischer Ausprägung und/oder durch Abwandlung der Rotationsgeschwindigkeit, Umfangsgeschwindigkeit und/oder durch Abwandlung der Vorspannung des Stranges sowie des Anpressdruckes an den Bauteilgrundkörper erfolgt.

Weitere vorteilhafte Ausführungsformen sind in den Unteransprüchen beansprucht und nachfolgend näher erläutert.

Ist das Bearbeitungselement an dem Schaft an zwei entlang einer Drehachse des Schaftes beabstandet angeordneten Aufnahmepositionen drehfest aufgenommen oder fixiert, ist das Werkzeug geschickt in Abhängigkeit der Länge des Bearbeitungselementes für unterschiedliche Bauteilmaße ausführbar.

Wenn erfindungsgemäß eine Aufnahmekerbe an einer ersten Aufnahmeposition des Schaftes vorgesehen ist, in der der Strang / das Bearbeitungselement hinein ragt und/oder verschiebbar geführt ist, ist das Bearbeitungselement besonders einfach an dem Schaft anbringbar.

In diesem Zusammenhang ist es auch vorteilhaft, wenn die Aufnahmekerbe an einer Stirnseite des Schaftes, vorzugsweise an einem oberen Ende des Schaftes, vorgesehen ist, sodass auch der Strang zu einer Stirnseite des Schaftes hin offengelegt ist. Dann ermöglichen die geometrischen Eigenschaften des Stranges unter Mitwirkung der Rotation die Ausbildung eines Schneidkörpers in Form des Bearbeitungselementes. Ragt das Bearbeitungselement / der Strang um ein gewisses Maß aus der Aufnahmekerbe heraus, ist der Strang als Schneidkörper besonders effektiv ausgeführt.

Alternativ erfindungsgemäß hierzu ist es jedoch auch möglich die erste Aufnahmeposition als ein Durchgangsloch, bevorzugt eine Durchgangsbohrung, das quer, weiter bevorzugt senkrecht, zu einer Drehachse des Schaftes verläuft, auszubilden, wobei das Bearbeitungselement dann wiederum in dieses Durchgangsloch hinein ragt und/oder verschiebbar in diesem geführt ist. Auch dadurch lässt sich das Werkzeug besonders robust ausbilden.

Ist das Bearbeitungselement erfindungsgemäß an einer zu der ersten Aufnahmeposition beabstandet angeordneten zweiten Aufnahmeposition an dem Schaft befestigt, ist das Bearbeitungselement in seiner Lage relativ zum Schaft besonders geschickt festgelegt. Die Betriebssicherheit und die Prozesssicherheit werden dadurch weiter verbessert.

Die zweite Aufnahmeposition ist erfindungsgemäß ebenfalls als ein Durchgangsloch, bevorzugt eine Durchgangsbohrung, das quer, weiter bevorzugt senkrecht, zu der Drehachse des Schaftes verläuft, ausgeführt.

Ist das Bearbeitungselement zwischen den Aufnahmepositionen frei verlaufend, d.h. beabstandet zu dem Schaft verlaufend, ist der Aufbau des Werkzeuges weiter vereinfacht.

In diesem Zusammenhang ist es besonders zweckmäßig, wenn das Bearbeitungselement schlaufenartig an dem Schaft angebracht ist. Dadurch kann über den Führungsverlauf des Stranges die Schlaufenausprägung und die Nachgiebigkeit des Stranges beeinflusst werden. Die Schlaufenform ist weiterhin entscheidend für die Zugänglichkeit am Bauteil.

Sind mehrere, vorzugsweise zwei, Bearbeitungselemente mit dem Schaft verbunden, ist die Form des Werkzeuges noch flexibler einstellbar.

Nicht erfindungsgemäß kann das Bearbeitungselement an zumindest einem Ende an einem sich quer zu der Drehachse des Schaftes erstreckenden Tragarm angebunden oder fixiert sein. Dadurch lassen sich auch Grate oder Anhaftungen mit relativ großem Durchmesser abtragen.

Nicht erfindungsgemäß kann bei Verwendung von zwei Bearbeitungselementen jeweils ein Ende des jeweiligen Bearbeitungselementes an einem Tragarm eingespannt sein. Dadurch wird das Werkzeug besonders geschickt für das Entgraten und / oder Reinigen von großen Durchmessern eingesetzt.

Wenn das Bearbeitungselement mittels eines Federelementes an dem Schaft vorgespannt gehalten ist, lässt sich durch die Federvorspannung der Verlauf / die Anordnung des Bearbeitungselementes in Abhängigkeit der Drehzahl geschickt einstellen.

Zudem ist es vorteilhaft, wenn an dem Schaft, vorzugsweise an einem stirnseitigen Ende / einer Stirnseite des Schaftes, ein Durchstoßkörper, wie eine Dornspitze, angebracht ist. Somit wird die Abführung der sich bildenden Abfallprodukte erleichtert und das Eintreten des Werkzeuges in eine geschlossenen Flitt- / Flint- / Grathaut ermöglicht.

Wenn an dem Schaft, vorzugsweise an einem stirnseitigen Ende / einer Stirnseite des Schaftes, ein Abtragelement, wie eine Entgratbürste, ein Schleifkörper, ein Polierkörper, ein Fräskörper oder ein Bohrkörper angebracht ist, ist das Werkzeug noch vielseitiger einsetzbar. Statt dem Abtragelement ist es auch möglich ein weiteres Reinigungselement an dem stirnseitigen Ende / der Stirnseite des Schaftes vorzusehen, wobei das Reinigungselement vorzugsweise als eine Reinigungsbürste ausgeführt ist.

Des Weiteren betrifft die Erfindung ein Bearbeitungssystem mit einem Werkzeug nach zumindest einer der zuvor beschriebenen Ausführungen sowie einer das Werkzeug aufnehmenden Bearbeitungsmaschine, wie einem Bewegungsautomaten, einem Roboter (z.B. ein Gelenkarmroboter) oder einer CNC-Maschine. Dadurch ist eine besonders präzise Entgratungs- bzw. Reinigungsmethode umgesetzt.

Die Erfindung wird nun nachfolgend anhand von Figuren näher erläutert, in welchem Zusammenhang auch verschiedene Ausführungsbeispiele beschrieben sind.

Es zeigen:
- Fig. 1: eine Draufsicht auf ein erfindungsgemäßes Werkzeug zum Reinigen und/oder Entgraten nach einem ersten Ausführungsbeispiel, wobei ein als Strang ausgebildetes Bearbeitungselement schlaufenförmig an einem Schaft des Werkzeuges aufgenommen ist,
- Fig. 2: eine Draufsicht auf ein erfindungsgemäßes Werkzeug nach einem zweiten Ausführungsbeispiel, wobei das Bearbeitungselement an einer stirnseitig angebrachten Aufnahmekerbe des Schaftes entlang seiner Erstreckung quer zum Schaft aufgenommen sowie geführt ist,
- Fig. 3: eine Draufsicht auf ein erfindungsgemäßes Werkzeug nach einem dritten Ausführungsbeispiel, wobei das Werkzeug ähnlich zu dem Werkzeug der Fig. 1 aufgebaut ist, nun jedoch mit einer zusätzlichen Dornspitze versehen ist,
- Fig. 4: eine Draufsicht auf ein erfindungsgemäßes Werkzeug nach einem vierten Ausführungsbeispiel, wobei das Werkzeug ähnlich zu dem Werkzeug der Fig. 1 aufgebaut ist, nun jedoch mit einer zusätzlichen Entgratbürste versehen ist,
- Fig. 5: eine Draufsicht auf ein erfindungsgemäßes Werkzeug nach einem fünften Ausführungsbeispiel, wobei das Werkzeug ähnlich zu dem Werkzeug der Fig. 1 aufgebaut ist, nun jedoch mit einem zusätzlichen Schleifkörper versehen ist,
- Fig. 6: eine Draufsicht auf ein erfindungsgemäßes Werkzeug nach einem sechsten Ausführungsbeispiel, wobei das Werkzeug ähnlich zu dem Werkzeug der Fig. 1 aufgebaut ist, nun jedoch mit einem zusätzlichen Fräskörper versehen ist,
- Fig. 7: eine Draufsicht auf ein nicht erfindungsgemäßes Werkzeug nach einem siebten Ausführungsbeispiel, dessen Bearbeitungselement in Form eines Stranges mittels eines Federelementes an dem Schaft vorgespannt angeordnet ist, und
- Fig. 8: eine Draufsicht auf ein nicht erfindungsgemäßes Werkzeug nach einem achten Ausführungsbeispiel, wobei mit dem Schaft zwei Tragarme ausgebildet sind, zwischen denen jeweils zwei Bearbeitungselemente eingespannt sind.

Die Figuren sind lediglich schematischer Natur und dienen ausschließlich dem Verständnis der Erfindung. Die gleichen Elemente sind mit denselben Bezugszeichen versehen. Auch können die verschiedenen Ausführungsbeispiele in ihrer Ausprägung frei miteinander kombiniert werden.

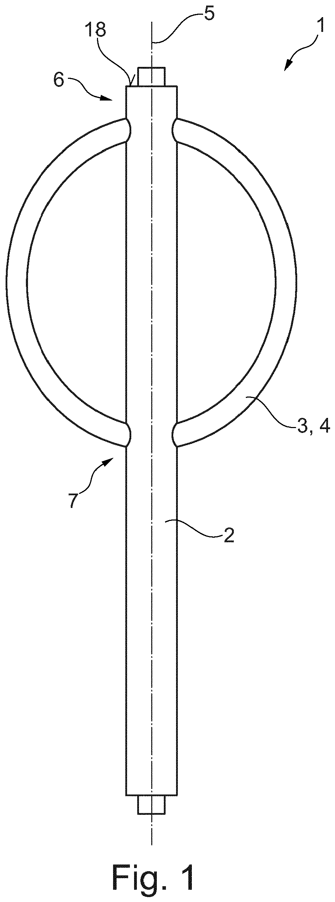

In Fig. 1 ist ein erfindungsgemäßes Werkzeug 1 zum Entgraten sowie Reinigen von Bauteilen nach einem bevorzugten ersten Ausführungsbeispiel dargestellt. Das Werkzeug 1 ist daher auch als Entgrat- / Reinigungswerkzeug oder Entgrat- und/oder Reinigungswerkzeug bezeichnet bzw. eingesetzt. Das Werkzeug 1 weist einen sich länglich erstreckenden Schaft 2 auf. Eine Längsachse des Schafts 2 bildet gleichzeitig eine Drehachse 5 aus, um die der Schaft 2 in einem Betriebszustand des Werkzeuges 1 rotiert. Zudem weist das Werkzeug 1 ein für die Entgratung und / oder Reinigung ausgebildetes Bearbeitungselement 3 auf. Das Bearbeitungselement 3 ist an dem Schaft 2 drehfest aufgenommen / angebracht.

Das Bearbeitungselement 3 besteht aus einem flexiblen / nachgiebigen Material und ist als Strang 4 ausgeformt. Das Bearbeitungselement 3 ist daher durch den flexiblen Strang unmittelbar ausgebildet. Der Strang 4 ist derart flexibel, dass er sich in Abhängigkeit einer Drehzahl des Schaftes 2 im Betriebszustand (elastisch) verformt / verbiegt / auswölbt. Der Strang 4 ist schlaufenartig / als Schlaufe an dem Schaft 2 angebracht.

Zur Aufnahme des Stranges 4 an dem Schaft 2, wie weiterhin erkennbar, ist er an zwei, entlang der Drehachse 5 beabstandet zueinander angeordneten, Aufnahmepositionen 6 und 7 mit dem Schaft 2 drehfest gekoppelt / an dem Schaft 2 drehfest gehalten / aufgenommen. An einer ersten Aufnahmeposition 6 ist der Strang 4 durch ein passgenaues Durchgangsloch (vorzugsweise Spielpassung) hindurchgeführt und damit drehfest mit dem Schaft 2 verbunden. An dieser ersten Aufnahmeposition 6 / in dem Durchgangsloch der ersten Aufnahmeposition 6 ist der Strang 4 bevorzugt verschiebbar geführt. An einer zweiten Aufnahmeposition 7 ist ebenfalls ein (passgenaues (vorzugsweise über Spielpassung)) Durchgangsloch vorgesehen, in das der Strang 4 wiederum hineinragt und drehfest in dem Schaft 2 aufgenommen ist.

Insgesamt bildet das Bearbeitungselement 3 zwei teil- / halbkreisartige (d.h. teil- / halbelliptische) Schlaufen aus, die sich zwischen den Aufnahmepositionen 6 und 7 frei, d.h. beabstandet zum Schaft 2 erstrecken. Die beiden Schlaufen sind hier in einer Ebene relativ zum Schaft 2 gegenüberliegend angeordnet / ausgebildet. Mittels der dem Schaft 2 radial abgewandten Seite ist der Strang 4 im Betrieb zum Entgraten und / oder Reinigen eingesetzt, d.h. der Strang 4 trägt mittels seiner Außenseite den Grat oder die Anhaftung an dem jeweils zu entgratenden oder reinigenden Bauteil ab. Hierbei schlägt der Strang 4, in Abhängigkeit der Drehzahl, auf den abzutragenden Grat oder die abzutragende Anhaftung auf, sodass dieser / diese abgetragen wird. Durch die flexible Ausgestaltung des Stranges 4 wölbt sich der Strang 4 im Betriebszustand des Werkzeuges 1 vom Schaft 2 in radialer Richtung nach außen und erhält somit beim Betrieb eine stabile Form, die von der Rotationsgeschwindigkeit und somit der Zentrifugalkraft abhängig ist. Der Strang 2 dient daher im Betriebszustand als Schlagstrang.

Der Strang 4 ist derart an den Aufnahmepositionen 6, 7 aufgenommen, dass er wieder abnehmbar mit dem Schaft 2 ausgebildet ist. Dadurch lässt sich nach einem Verschleiß des Bearbeitungselementes 3 dieses besonders einfach austauschen.

Zum Betrieb des Werkzeuges 1 wird durch das Drehen des Schaftes 2 auch das Bearbeitungselement 3 / der Strang 4 in Rotation versetzt. Durch die Rotation und die damit verbundene Zentrifugalkraft wird der Strang 4 vom Schaft 2 aus nach außen gedrängt. Diese nach außen gedrängte Wölbung des Stranges 4 wälzt / gleitet mit seiner äußeren Ausprägung / Außenseite auf dem jeweiligen Bauteilgrundkörper ab. Die Vorschubbewegung wird bevorzugt bei Verwendung des Werkzeuges 1 in einem Bearbeitungssystem durch einen Bewegungsautomaten, in dem das Werkzeug 1 dann aufgenommen und geführt ist, bspw. entlang einer zu entgratenden / reinigenden Kante / Fläche erzeugt. Dadurch, dass der Strang 4 eine definierte Nachgiebigkeit und Verformbarkeit besitzt, werden Bauteiltoleranzen und Bewegungstoleranzen des Bewegungsautomaten ausgeglichen - der Strang 4 schmiegt sich an das Bauteil an. Alternativ kann das Bauteil um das Werkzeug 1 herum, beispielsweise mittels eines Bewegungsautomaten, geführt werden. Das rotierende Werkzeug 1 kann also fest stehen (d.h, stationär sein), um lediglich die Rotationsbewegung auszuführen. Das Werkzeug 1 kann also stationär betrieben werden.

Der Strang 4 selbst kann aus einem Metallwerkstoff, aus Naturfasern, aus einem Kunststoff, oder einem keramischen Werkstoff oder Kombinationen dieser Materialien / Werkstoffe bestehen. Auch können diese Materialien / der Strang 4 prinzipiell je nach Anwendungsfall mit mehr oder weniger abrasiven Oberflächen oder Zusätzen versehen oder bestückt sein.

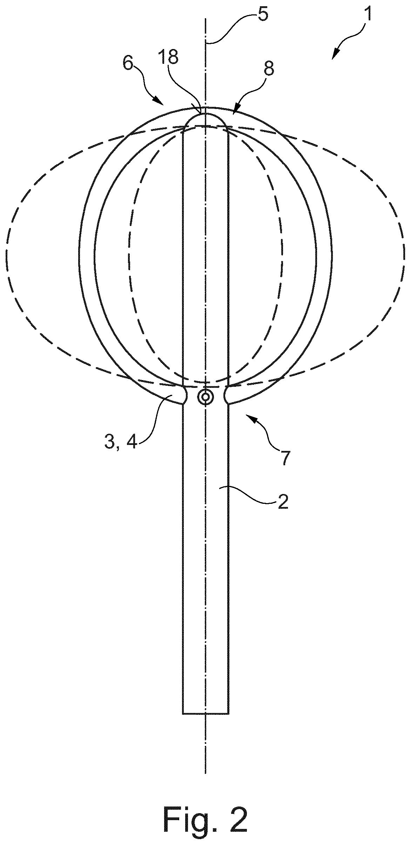

In Verbindung mit Fig. 2 ist ein zweites Ausführungsbeispiel des Werkzeuges 1 dargestellt, das prinzipiell jedoch gemäß dem Werkzeug 1 des ersten Ausführungsbeispiels aufgebaut ist, weshalb nachfolgend der Kürze wegen lediglich die Unterschiede beschrieben sind.

In Fig. 2 ist das Bearbeitungselement 3 / der Strang 4 in zwei weiteren alternativen Erstreckungen durch zwei elliptische, strichlierte Linien dargestellt. Der Strang 4 kann in seiner Länge individuell gewählt werden, je nach Einsatz des Werkzeuges 1 sowie des zu entgratenden Bauteils. Die strichlierten Linien zeigen alternative Erstreckungen des Bearbeitungselementes 3, wobei diese stets schlaufenartig sind.

Zudem ist die erste Aufnahmeposition 6 gegenüber dem ersten Ausführungsbeispiel etwas anders ausgeführt. Hierzu dient eine Aufnahmekerbe 8, die in einer Stirnseite 18 / einem stirnseitigen Ende des Schaftes 2 eingebracht ist. Das Bearbeitungselement 3 / der Strang 4 erstreckt sich durch die Aufnahmekerbe 8 hindurch und ist in dieser Aufnahmekerbe 8 verschiebbar geführt. Zugleich ist die die Aufnahmekerbe 8 in ihrem Abmaß derart auf das Bearbeitungselement 3 abgestimmt, dass das Bearbeitungselement 3 (passgenau (vorzugsweise über Spielpassung)) drehfest in der ersten Aufnahmeposition 6 angebracht ist. Auch ist die Tiefe der Aufnahmekerbe 8 derart auf das Bearbeitungselement 3 abgestimmt, dass das Bearbeitungselement 3 um ein gewisses Maß aus der Stirnseite 18 des Schaftes 2 hinaus ragt, z.B. um die Hälfte oder ein Drittel eines Durchmessers des Bearbeitungselements 3. Somit kann auch dieser Bereich des Bearbeitungselementes 3 zur Bearbeitung verwendet werden. Dadurch wird eine besonders geschickte Kerbfixierung ausgeführt, sodass der Strang 4 als eintauchfähige Lösung am Werkzeug 1 eingesetzt ist. Bei dieser Variante ist der Strang 4 somit an der ersten Aufnahmeposition 6 offenliegend, sodass die geometrischen Eigenschaften des Stranges 4 unter Mitwirkung der Rotation einen Schneidkörper darstellen. An der zweiten Aufnahmeposition 7 kann das Bearbeitungselement 3, beispielsweise mittels einer Schraube oder dergleichen, am Schaft 2 fixiert sein.

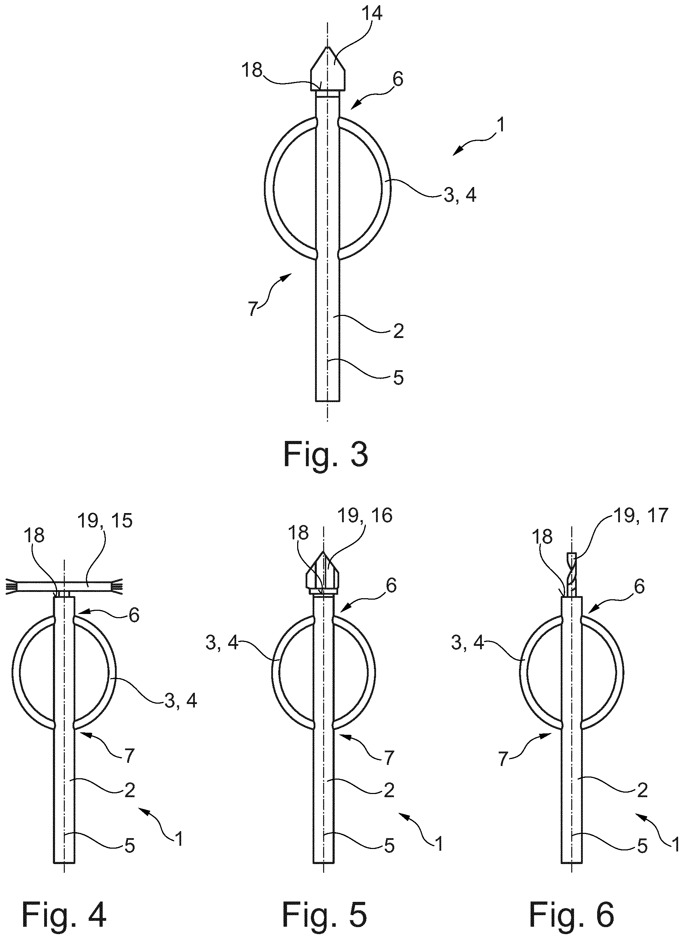

In Verbindung mit den Fign. 3 bis 6 ist es prinzipiell dargestellt, dass das Werkzeug 1 des ersten Ausführungsbeispiels in weiteren vier Ausführungsbeispielen leicht adaptierbar ist. In diesen Ausführungsbeispielen sind verschiedene Elemente an der Stirnseite 18 / an dem Schaft 2 angebracht.

In Fig. 3 ist gemäß einem dritten Ausführungsbeispiel des Werkzeuges 1 eine Dornspitze 14 an der Stirnseite 18 angebracht. Die Dornspitze 14 bildet einen Durchstoßkörper aus. Die Dornspitze 14 ist so ausgeformt und an dem Schaft 2 angebracht, dass sie mit ihrer Spitze entlang der Drehachse 5 ausgerichtet sowie von dem Schaft 2 weggerichtet ist. Dadurch ist ein Durchstoßkörper in Form der Dornspitze 14 vorhanden, der das Durchstoßen von Gratmaterial im Betrieb ermöglicht.

Desweiteren ist es auch möglich, insbesondere für eine effektive Wechselbearbeitung sowie eine mehrstufige Bearbeitung, Abtragelemente 19 gemäß den Ausführungsbeispielen der Fign. 4 bis 6 an dem Werkzeug 1 des ersten Ausführungsbeispiels vorzusehen.

In dem vierten Ausführungsbeispiel gemäß Fig. 4 ist zusätzlich oder alternativ eine Entgratbürste 15, die alternativ auch als eine Reinigungsbürste ausgebildet ist, an der Stirnseite 18 / an dem Schaft 2 angebracht, wobei die Entgratbürste 15 an ihrer radialen Außenseite in Bezug auf die Drehachse 5 Bürsten aufweist. Als Variante könnte eine Entgrat- / Reinigungsbürste alternativ auch in axialer Richtung eingesetzt sein (abhängig vom Bearbeitungsfall), d.h. die einzelnen Bürsten wären dann in axialer Richtung ausgerichtet.

Gemäß dem fünften Ausführungsbeispiel nach Fig. 5 ist es auch möglich, statt oder zusätzlich zu der Entgratbürste 15 / Reinigungsbürste, einen Schleifkörper 16, alternativ auch einen Polierkörper, an der Stirnseite 18 / an dem Schaft 2 anzubringen. Dieser Schleif- / Polierkörper 16 weist eine dem Schaft 2 abgewandte radiale und/oder axiale oder in anderen Winkelanordnungen wirkende Wirkflächen auf.

Gemäß Fig. 6 ist es nach einem sechsten Ausführungsbeispiel auch möglich alternativ oder zusätzlich ein Fräswerkzeug / einen Fräskörper 17 oder Bohrer / Bohrkörper an der Stirnseite 18 / an dem Schaft 2 anzubringen.

Der übrige Aufbau sowie die übrige Funktion der Werkzeuge 1 der dritten bis sechsten Ausführungsbeispiele entsprechen im Wesentlichen wiederum dem Aufbau sowie der Funktion des Werkzeuges 1 des ersten Ausführungsbeispiels.

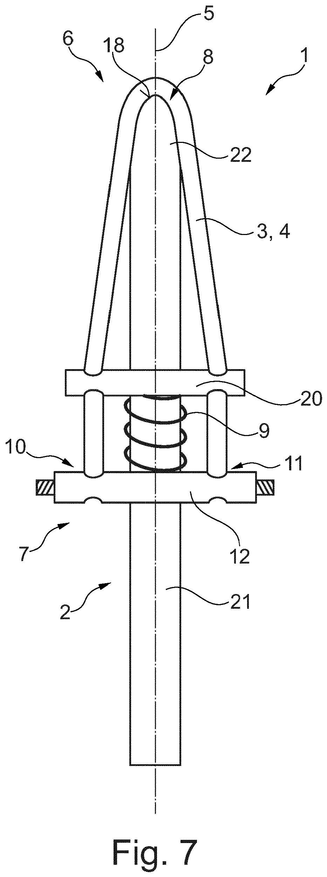

In Fig. 7 ist ein nicht erfindungsgemäßes siebtes Ausführungsbeispiel des Werkzeuges 1 abgebildet. Auch dieses Entgrat- und/oder Reinigungswerkzeug 1, wie das Werkzeug 1 des ersten Ausführungsbeispiels, weist einen Schaft 2 auf, an dem wiederum das Bearbeitungselement 3 in Form des Stranges 4 aufgenommen ist. Die Aufnahme des Bearbeitungselementes 3 ist jedoch etwas anders als beim ersten Ausführungsbeispiel gewählt. Das Bearbeitungselement 3 ist wiederum an dem Schaft 2 angebracht. Mit einem ersten Ende 10 sowie einem zweiten Ende 11 ist das Bearbeitungselement 3 nun an einem sich quer zu dem Schaft 2 erstreckenden nicht erfindungsgemßen Tragarm 12 (auf gleicher axialer Höhe zum Schaft 2) befestigt. Der Tragarm 12 ist ein drehfester Bestandteil des Schaftes 2 / drehfest mit dem Schaft 2 verbunden. Der Tragarm 12 erstreckt sich quer, nämlich im Wesentlichen senkrecht, zum Schaft 2 / zur Drehachse 5. Jedes Ende 10 und 11 des Bearbeitungselementes 3 ist an einer anderen Seite des Schaftes 2 in dem Tragarm 12 eingespannt. Somit ist die zweite Aufnahmeposition 7 hier durch den Tragarm 12 ausgebildet. Von dem jeweiligen Ende 10, 11 erstreckt sich das Bearbeitungselement 3 in Längsrichtung des Schaftes 2 hin zu der ersten Aufnahmeposition 6, die hier wiederum an einer Stirnseite 18 des Schaftes 2 ausgebildet ist. An der Stirnseite 18 ist das Bearbeitungselement 3 umgelegt, sodass letztendlich eine U- / V-förmige Umlegung des Stranges 4 erzielt ist. Hierzu kann an der Stirnseite 18 eine Kerbe vorgesehen sein.

Desweiteren ist in diesem nicht erfindungsgemäßen Ausführungsbeispiel der Schaft 2 mehr-, nämlich zweiteilig. Die beiden Schaftteile 21 und 22 sind relativ zueinander verschiebbar aufgenommen / geführt. Ein erster Schaftteil 21 ist mit dem ersten Tragarm 12 verschiebefest verbunden. Ein zweiter Schaftteil 22 weist wiederum die erste Aufnahmeposition 6 auf und ist relativ zu dem ersten Schaftteil 21 mittels eines Federelementes 9, hier einer Schraubendruckfeder, vorgespannt. Insbesondere sind die Schaftteile 21 und 22 in der Längsrichtung des Schaftes 2 relativ zueinander vorgespannt. Dies bedeutet, dass die an dem zweiten Schaftteil 22 ausgebildete Stirnseite 18 relativ zu dem ersten Tragarm 12 vorgespannt ist und somit das Bearbeitungselement 3 in Längsrichtung des Schaftes 2 mit einer bestimmten Vorspannkraft dehnt. In Abhängigkeit der Ausbildung des Federelementes 9 wird im Betrieb das Bearbeitungselement 3 durch die wirkende Fliehkraft nach außen gedrängt / nach außen gewölbt, wobei die Zentrifugalkraft hier entgegen einer Federkraft / Vorspannkraft des Federelementes 9 wirkt.

Zudem ist das Bearbeitungselement 3 auf jeder Seite des Schaftes 2 mittels eines sich im Wesentlichen parallel zu dem Tragarm 12 erstreckenden nicht erfindungsgemäßen Führungsarm 20 geführt. Der Führungsarm 20 ist drehfest mit dem zweiten Schaftteil 22 verbunden.

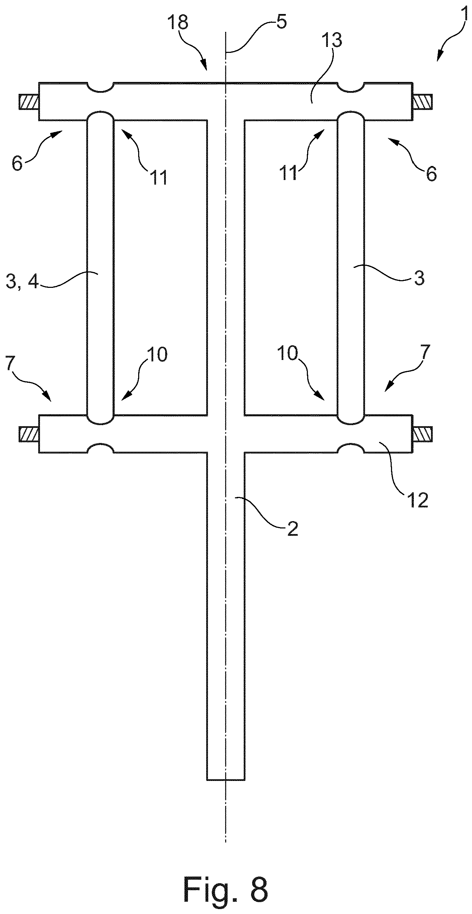

Ein weiteres nicht erfindungsgemäßes Ausführungsbeispiel eines Werkzeuges 1 ist in Fig. 8 abgebildet. Das Werkzeug 1 dieses achten Ausführungsbeispiels ist wiederum ähnlich zu dem Werkzeug 1 des ersten Ausführungsbeispiels aufgebaut. Jedoch ist an diesem Werkzeug 1 nicht nur ein einzelnes Bearbeitungselement 3, sondern zwei Bearbeitungselemente 3 vorhanden. Jedes Bearbeitungselement 3 ist wiederum als ein flexibler Strang 4 ausgeführt. Die Bearbeitungselemente 3 sind nun zwischen zwei in Längsrichtung des Schaftes 2 beabstandet zueinander angeordneten nicht erfindungsgemäßen Tragarmen 12 und 13 eingespannt. Die beiden Tragarme 12 und 13 erstrecken sich wiederum im Wesentlichen senkrecht / quer zur Drehachse 5. Auch erstrecken sich die Tragarme 12, 13 im Wesentlichen parallel zueinander. Die Bearbeitungselemente 3 sind im Wesentlichen gerade zwischen den Tragarmen 12 und 13, im unbelasteten Zustand / Ruhezustand des Werkzeuges 1 gesehen, eingespannt. Insbesondere erstrecken sich die Bearbeitungselemente 3 im Wesentlichen parallel zur Drehachse 5. Im Betriebszustand des Werkzeuges 1 wölbt sich jedes der beiden Bearbeitungselemente 3 mit seinem frei zwischen den Tragarmen 12 und 13 verlaufenden Abschnitt wiederum in radialer Richtung nach außen / von dem Schaft 2 weg.

In anderen Worten ausgedrückt, besteht ein Grundaufbau des erfindungsgemäßen Werkzeuges 1 stets aus einem Werkzeugschaft 2, an dem es einen oberen Befestigungs- und Führpunkt (erste Aufnahme- / Befestigungsposition 6 / obere Schlagstrangfixierung) und einen unteren Befestigungspunkt (zweite Aufnahme- / Befestigungsposition 7 / untere Schlagstrangfixierung) gibt. Zwischen den beiden Befestigungspunkten 6, 7 ist der Schlagstrang 4 in einem umlaufenden Schlaufenverlauf fixiert oder drehfest aufgenommen. Der Schlagstrang 4 gilt bei dem Werkzeug als Verschleißkomponente und kann jederzeit ausgetauscht oder für andere Anwendungen abgewandelt werden. Das Werkzeug 1 kann weiterhin als Abwandlung mit dem oberen Führpunkt 6 als Kerbfixierung (Aufnahmekerbe 8) ausgeführt sein, um den Schlagstrang 4 aufzunehmen. Auch ist es in weiteren Abwandlungen möglich eine Dornspitze oder zur Wechselbearbeitung ein zusätzliches Bearbeitungswerkzeug, wie eine Entgratbürste 15, einen Schleifkörper / Polierkörper 16 oder ein Fräswerkzeug / Bohrwerkzeug / Bohrer (Fräskörper 17) vorzusehen. Eine weitere Bauform des Werkzeuges 1 enthält ein Vorspannfederelement (Federelement 9), welches den Schlagstrang 4 in eine Grundsteifigkeit sowie eine Pressführung im oberen Kerbführungspunkt 6 versetzt. Zusätzlich ermöglicht das Vorspannfederelement 9 dem Schlagstrang 4 eine Nachgiebigkeit auch dann, wenn das Material ohne Schlaufenbildung auf das Werkzeug 1 aufgespannt ist. Im Falle der Schlaufenausprägung ermöglicht das Vorspannfederelement 9 eine variable Schlaufengeometrie in Abhängigkeit von der Drehzahl und der damit verbundenen Zentrifugalkraft. Eine weitere nicht erfindungsgemäße Bauform des Werkzeuges 1 in Form einer Entgratharfe (Fig. 8), welches den Schlagstrang 4 in paralleler Anordnung in einem Abstand zum Grundkörper des Bauteils führt, ermöglicht in Rotation eine im Wesentlichen zylindrische Werkzeuggeometrie. Die natürliche Nachgiebigkeit des Schlagstranges 4 ermöglicht auch bei dieser Anordnung ein Anschmiegverhalten (Auswölben) an den Grundkörper des Bearbeitungswerkstückes / Bauteils. Diese nicht erfindungsgemäße Variante kann auch alternativ als Dreieck mit einer mittigen oberen Schlagstrangfixierung 6 oder anderen Geometrien als auch mit Federvorspannelement ausgeführt sein. Zudem kann das Werkzeug 1 ein, zwei (in der Regel) oder mehrere Schlagstränge 4 auf sich führen. Das Werkzeug 1 kann stationär oder auf einem Bewegungsautomaten oder in einer sonstigen Bearbeitungsmaschine, wie einer CNC-Fräse, betrieben werden.

Die erfindungsgemäße Bauform , die an die Gegebenheiten wie Antriebseinheit und Bauteilgeometrie angepasst ist und weitestgehend integriert ist, bietet kleinstmögliche Störkonturen und ermöglicht somit eine maximale Ausnutzung der Freiheitsgrade und Bewegungsmöglichkeiten der eingesetzten Bewegungsautomaten, insbesondere bei komplexen dreidimensionalen Konturbearbeitungen. Der Verwendungszweck für die Kunststoffbearbeitung ist auch erweiterbar. Auch metallische Werkstoffe, Holz, Keramiken und Beton können mit dieser Werkzeuganordnung entgratet oder von Anhaftungen gereinigt werden. Es gibt viele Anwendungsfelder für das Werkzeug 1. Sowohl als Werkzeug beim CNC-Bearbeiten, als auch als Werkzeugaufsatz beim Bearbeiten mit einem 6-Achsen-Gelenkarmroboter oder anderen Bewegungsautomaten. Die Betriebsart dieses Werkzeuges 1 kann sowohl im Gleichlauf als auch im Gegenlauf erfolgen.

### Bezugszeichenliste

- 1: Entgrat-/Reinigungswerkzeug
- 2: Schaft
- 3: Bearbeitungselement
- 4: Strang
- 5: Drehachse
- 6: erste Aufnahmeposition
- 7: zweite Aufnahmeposition
- 8: Aufnahmekerbe
- 9: Federelement
- 10: erstes Ende
- 11: zweites Ende
- 12: erster Tragarm
- 13: zweiter Tragarm
- 14: Dornspitze
- 15: Entgratbürste
- 16: Schleifkörper
- 17: Fräskörper
- 18: Stirnseite
- 19: Abtragelement
- 20: Führungsarm
- 21: erster Schaftteil
- 22: zweiter Schaftteil

## Patentansprüche

1. Werkzeug (1) zum Entgraten und/oder Reinigen eines Bauteils, mit einem Schaft (2) und einem an dem Schaft (2) wiederabnehmbar angebrachten Bearbeitungselement (3), wobei das Bearbeitungselement (3) als ein flexibler Strang (4) ausgebildet und derart an dem Schaft (2) aufgenommen ist, dass es sich in einem Betriebszustand zumindest abschnittsweise mit zunehmender Drehzahl des Schafts (2) radial nach außen wölbt, und wobei das Bearbeitungselement (3) an dem Schaft (2) an zwei entlang einer Drehachse (5) des Schaftes (2) beabstandet angeordneten Aufnahmepositionen (6, 7) fixiert oder drehfest aufgenommen ist, und **dadurch gekennzeichnet, dass** das Bearbeitungselement (3) als Schlaufe an dem Schaft (2) angebracht ist, wobei eine Aufnahmekerbe (8) oder ein passgenaues Durchgangsloch, an einer ersten Aufnahmeposition (6) vorgesehen ist, und das Bearbeitungselement (3) sich durch die Aufnahmekerbe (8) oder das passgenaue Durchgangsloch hindurch erstreckt und verschiebbar geführt ist und weiterhin das Bearbeitungselement (3) an einer zweiten Aufnahmeposition (7) an dem Schaft (2) befestigt ist und die zweite Aufnahmeposition (7) als ein Durchgangsloch ausgeführt ist.

2. Werkzeug (1) nach Anspruch 1, **dadurch gekennzeichnet, dass** das Bearbeitungselement (3) mittels eines Federelementes (9) an dem Schaft (2) vorgespannt gehalten ist.

3. Werkzeug (1) nach einem der Ansprüche 1 bis 2, **dadurch gekennzeichnet, dass** mehrere Bearbeitungselemente (3) mit dem Schaft (2) verbunden sind.

4. Werkzeug (1) nach einem der Ansprüche 1 bis 3, **dadurch gekennzeichnet, dass** an dem Schaft (2) ein Durchstoßkörper, wie eine Dornspitze (14), angebracht ist.

5. Werkzeug (1) nach einem der Ansprüche 1 bis 4, **dadurch gekennzeichnet, dass** an dem Schaft (2) ein Abtragelement (19), wie eine Entgratbürste (15), ein Schleifkörper (16), ein Polierkörper, ein Fräskörper (17) oder ein Bohrkörper angebracht ist.

6. Bearbeitungssystem mit einem Werkzeug (1) nach einem der Ansprüche 1 bis 5 sowie einer das Werkzeug (1) aufnehmenden Bearbeitungsmaschine, wie einem Bewegungsautomaten oder Gelenkarmroboter.

## Claims

1. A tool (1) for flash-trimming and/or cleaning a component, comprising a shaft (2) and a processing element (3) mounted removably on the shaft (2), wherein the processing element (3) is configured as a flexible cord (4) and is received on the shaft (2) such that, in an operating state, it bulges radially outwards in at least some sections as the rotational speed of the shaft (2) increases, and wherein the processing element (3) is fixed or received in a torque-proof manner on the shaft (2) at two receiving positions (6, 7) arranged spaced apart along the rotation axis (5) of the shaft (2), and **characterized in that** the processing element (3) is mounted as a loop on the shaft (2), wherein a receiving notch (8) or a custom-fit through-hole is provided at a first receiving position (6), and the processing element (3) extends through the receiving notch (8) or the custom-fit through-hole and is guided displaceably, and furthermore the processing element (3) is fastened to the shaft (2) at a second receiving position (7), and the second receiving position (7) is embodied as a through-hole.

2. The tool (1) according to Claim 1, **characterized in that** the processing element (3) is held on the shaft (2) in a prestressed manner by means of a spring element (9).

3. The tool (1) according to one of Claims 1 to 2, **characterized in that** several processing elements (3) are connected to the shaft (2).

4. The tool (1) according to one of Claims 1 to 3, **characterized in that** a penetrating body, such as a mandrel tip (14) is mounted on the shaft (2).

5. The tool (1) according to one of Claims 1 to 4, **characterized in that** a removing element (19), such as a flash-trimming brush (15), an abrading body (16), a polishing body, a milling body (17) or a drilling body, is mounted on the shaft (2).

6. A processing system with a tool (1) according to one of Claims 1 to 5, and with a processing machine, receiving the tool (1), such as an automated moving device or articulated arm robot.

## Revendications

1. Outil (1) pour l'ébavurage et/ou le nettoyage de pièces en matière plastique, comprenant un arbre (2) et un élément d'usinage (3) amovible placé sur l'arbre (2), dans lequel l'élément d'usinage (3) est conçu en tant qu'un brin flexible (4) et est ainsi reçu sur l'arbre (2) que dans l'état de marche, il se courbe radialement vers l'extérieur au moins par tronçons à mesure que le nombre de tours de l'arbre (2) augmente, et dans lequel élément d'usinage (3) est fixé ou reçu fixe en rotation sur l'arbre (2) en deux positions de réception (6, 7) disposées à distance le long d'un pivot (5) de l'arbre (2) et **caractérisé en ce que** l'élément d'usinage (3) est posé en tant que passant sur l'arbre (2), dans lequel une encoche de réception (8) ou un trou de passage ajusté est prévu à une première position de réception (6), et l'élément d'usinage (3) s'étend et est dirigé mobile à travers l'encoche de réception (8) ou le trou de passage et en outre l'élément d'usinage (3) est fixé à une seconde position de réception (7) sur l'arbre (2) et la seconde position de réception (7) est conçue en tant qu'un trou de passage.

2. Outil (1) selon la revendication 1, **caractérisé en ce que** l'élément d'usinage (3) est maintenu précontraint sur l'arbre (2) au moyen d'un élément de ressort (9).

3. Outil (1) selon l'une des revendications 1 à 2, **caractérisé en ce que** plusieurs éléments d'usinage (3) sont reliés à l'arbre (2).

4. Outil (1) selon l'une des revendications 1 à 3, **caractérisé en ce qu'**un corps pour transpercer, comme une pointe de mandrin (14), est placé sur l'arbre (2).

5. Outil (1) selon l'une des revendications 1 à 4, **caractérisé en ce qu'**un élément d'enlèvement (19), comme une brosse d'ébavurage (15), un corps de meulage (16), un corps de polissage, un corps de fraisage (17) ou un corps de perçage est placé sur l'arbre (2).

6. Système d'usinage comprenant un outil (1) selon l'une des revendications 1 à 5 ainsi qu'une machine d'usinage recevant l'outil (1), comme un automate de déplacement ou un robot à bras articulé.
